(19) Europäisches Patentamt
European Patent Office
Office européen des brevets

(11) **EP 2 275 364 A1**

(12) **EUROPEAN PATENT APPLICATION**

(43) Date of publication:
**19.01.2011 Bulletin 2011/03**

(51) Int Cl.:
**B65G 15/02** [(2006.01)]

(21) Application number: **09165764.3**

(22) Date of filing: **17.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Vila Torra, Cecilia**
**08251 Santpedor (ES)**

(72) Inventor: **Vila Torra, Cecilia**
**08251 Santpedor (ES)**

(74) Representative: **Carpintero Lopez, Francisco**
**Herrero & Asociados, S.L.**
**Alcalá 35**
**28014 Madrid (ES)**

(54) **Guide means fixed to curved conveyor belts**

(57)     Peripheral profile for the guiding of curved conveyor belts (4), which comprises; a protuberane (1) whereon the guide rollers contact, a radial extension (2) finished in a longitudinal U-shaped nctch (3) for the insertion and! fastening to the peripheral edge of the curved conveyor belt (4), and an elastic area (5) between the protuberance and the notch, to absorb the radial oscillations of the belt. Likewise, the protuberance comprises an axial orifice.

FIG. 2

**Description**

**OBJECT OF THE INVENTION**

The main object of the present invention consists of a peripheral profile for the guiding of curved conveyor belts, which comprises an elastic area to absorb the radial oscillations of the conveyor belt.
Another aspect of the invention consists of the disposal of means to improve its bending behaviour.

**BACKGROUND OF THE INVENTION**

The installation of conveyor belts for the movement of packages or parcels from one point to another requires straight segments and curved segments, to configure the route from the point of origin to the point of arrival of the goods.
It is in the curved segments where greatest problems and faults arise, since they require peripheral guide devices for the curved conveyor belt to work correctly. These guide devices comprise bearing sets that retain and guide the curved conveyor belt, through a peripheral protuberance disposed for said purpose on the outer perimeter of the conveyor belt.
In the state of the art, European patent EP0349830 is already known, which discloses a guide profile for conveyor belt curves, which comprises a protuberance which is driven between the guide bearings, the protuberance whereof is provided with a radial appendage provided with a conduit for the housing of the end of the conveyor belt. The profile disclosed in said patent has the drawback that it excessively rigid, which causes vibrations, noise and faults in the conveyor belts.
Curved conveyor belts produce radial oscillations, due to:

- The impossibility of making a totally circular cut of the belt perimeter.
- The belt's own constitution, since it is produced from a structure with intercrossing of reinforcing thread, which causes a different radial behaviour depending on the causes a different radial behaviour depending on the distribution of said internal structure.

These radial oscillations cause cyclical overstresses on the belt's different support and guide elements, which cause annoying noises, vibrations and fatigue, with the subsequent faults and machine stoppages.

**DESCRIPTION OF THE INVENTION**

The peripheral profile for the guiding of curved conveyor belts proposed by the invention, resolves the aforementioned problem as it absorbs the radial oscillations thereof.
Therefore, and more specifically, the peripheral profile for the guiding of curved conveyor belts, comprises a protuberance whereon the guide rollers contact, and a radial extension finished in a longitudinal U-shaped notch for the insertion and fastening to the peripheral edge of the curved conveyor belt. To absorb the radial oscillations of the belt, the peripheral profile comprises, between the protuberance and the notch, an elastic area.
The elasticity ($K_{linear}$) of said elastic area will basically depend on three parameters: the elasticity module (E) of the material used to produce the profile, the equivalent mean thickness ($T_{EM}$) and the length (L) of the segment that forms the elastic area.
The material used to manufacture the profile, and the equivalent mean thickness ($T_{EM}$) of the elastic segment, will be determined by the stressing requirements of the curved conveyor belt system. Its length (L) shall be the same or greater than the equivalent mean thickness ($T_{EM}$) of said segment.
The incorporation of said elastic segment makes it possible to absorb the radial oscillations of the belt, reducing, and especially homogenizing the overstresses transmitted to the bearings, without altering the operating conditions of the guide system.
Due to the nature of the material they are manufactured with the profile protuberance and the fastening notch have a certain elasticity, which can absorb a small part of the radial oscillations. Their absorption capacity is variable and difficult to quantify, since it depends on many circumstances, such as the geometric deformation of the protuberance, as well as the exact stitching point between the branches of the notch and the end of the curved conveyor belt. The incorporation of said elastic segment makes it possible to accurately determine and calculate the elastic absorption of the radial oscillations, as they are not affected by other circumstantial factors.
Preferably, the length of the segment of the elastic area is between 5 and 30 mm.
Another aspect of the invention consists of the disposal of a continuous axial orifice in the protuberance of the peripheral profile, to improve its bending behaviour. Preferably, said axial orifice is of circular configuration. This would improve the profile's behaviour, avoiding possible fractures due to the rigidity of the protuberance, in its rotation through the end rollers of the curved conveyor belt.

To facilitate the fastening of the peripheral profile on the conveyor belt, it has been provided that the branches of the U-shaped notch are slightly inclined towards the interior to clip to the external peripheral edge of the conveyor belt. Subsequently, the definitive securing of both elements shall be performed by longitudinal stitching. It can also be secured by the use of a suitable adhesive substance.

Finally, we should indicate that to avoid the contact of the edges of the bearings, and therefore their fissure, the peripheral profile comprises, at the joining point between the protuberance and the radial fastening extension, separate longitudinal grooves.

## DESCRIPTION OF THE DRAWINGS

To complement the description being made and in order to aid towards a better understanding of the characteristics of the invention, in accordance with a preferred example of practical embodiment thereof, a set of drawings is accompanied as an integral part of said description wherein the following has been represented with illustrative and non-limitative character:

Figure 1.- Shows a perspective view of a segment of the peripheral profile for the guiding of curved conveyor belts, object of the present invention, wherein the elastic area and the axial orifice of the protuberance can be observed.
Figure 2.- Shows a cross-section of an example of embodiment of the profile, with the elastic segment duly dimensioned.
Figure 3.- Shows a cross-section of the profile, where the guide bearings are represented to show their functioning.

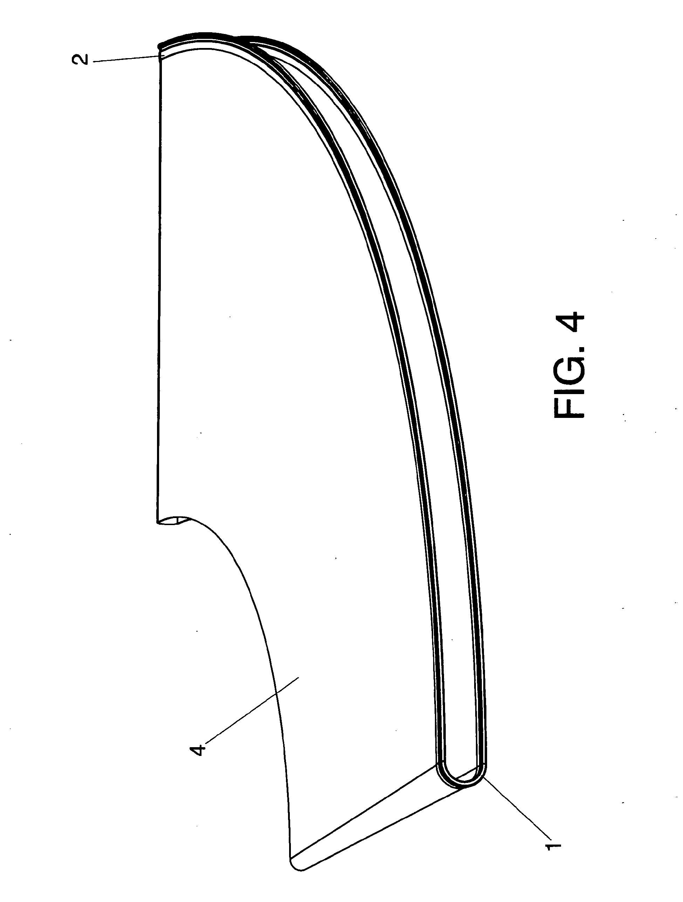

Figure 4.- Shows a perspective view of the conveyor belt, with the peripheral profile duly mounted, wherein its geometric configuration can be observed.

## PREFERRED EMBODIMENT OF THE INVENTION

In light of the figures, a preferred embodiment of the device which constitutes the object of this invention is described below.

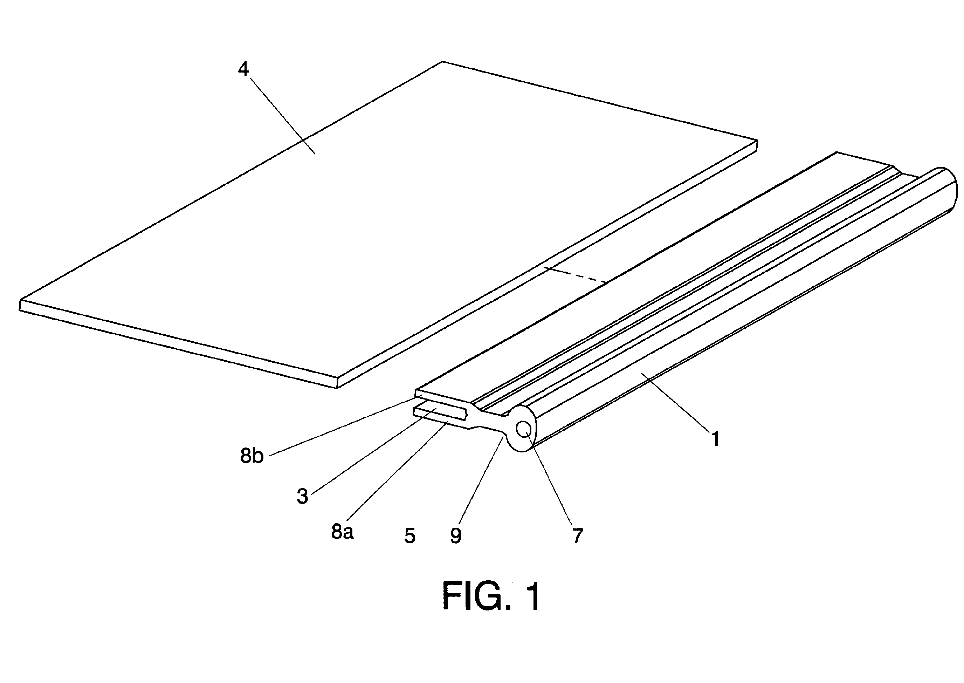

In figure 1 it is observed how the peripheral profile for the guiding of conveyor belts comprises a protuberance (1) provided with a radial extension (2), finished in a longitudinal notch (3) for the insertion and fastening to the peripheral edge of the conveyor belt (4).

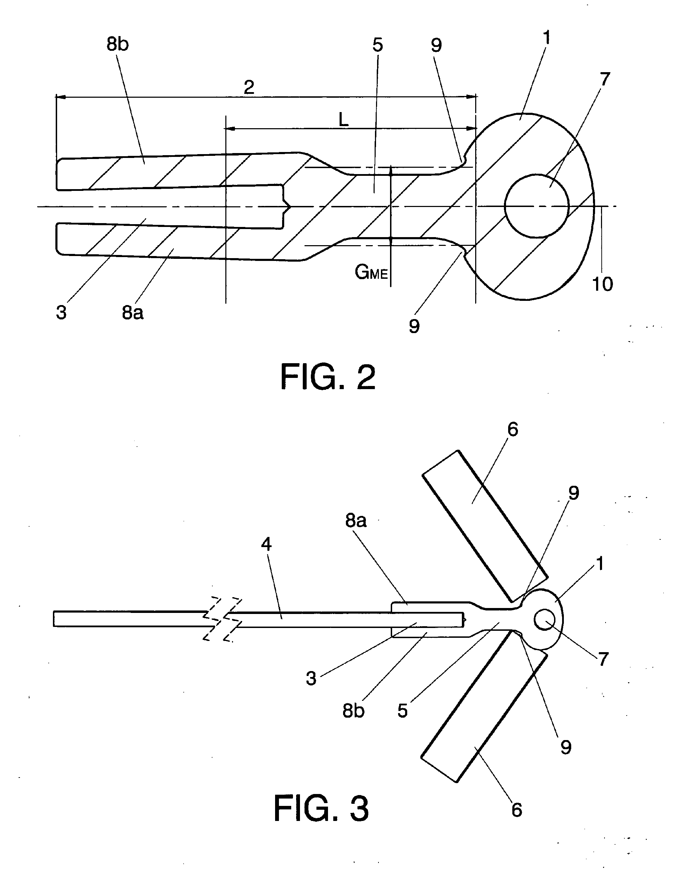

As can be observed in figures 1 and 2, the peripheral profile comprises an elastic segment (5), disposed between the protuberance (1) and the notch (3), to absorb the radial oscillations of the belt (4), reducing and homogenizing the overstresses transmitted to the bearings (6).

In the present example of embodiment, it has been determined that for the stressing requirements of the curved conveyor belt system, it is necessary that the elastic segment (5) has an elasticity $K_{linear} = 7.14$ N/mm$^2$, a material for the manufacturing of the profile with an elasticity module of E= 27 N/mm$^2$ and an equivalent mean thickness $T_{EM}$= 5.5 mm.

The length of the elastic segment (5) will be determined by the following formula:

$$Klinear = E * \frac{Tem}{L} \quad \text{where } L \geq Tem$$

The length of the elastic segment (5) for the present example of embodiment is 20.8mm. Since said elastic segment (5) may have different thicknesses in the same segment, the minimum thickness of the different sections will be determined by the load capacity of the chosen material.

The incorporation of said elastic segment (5) additionally has the advantage that it allows accurately determining and calculating the elastic capacity of absorption of the radial oscillations, as they are not affected by other circumstantial factors.

On the other hand, and to improve the bending behaviour of the peripheral profile when it rotates through the end rollers, the protuberance (1) comprises a continuous axial orifice (7) of symmetrical configuration with respect to the longitudinal shaft (10) of the profile, which avoids its fracture.

The fastening of the peripheral profile on the outer edge of the belt (4) in the present example of embodiment is performed by longitudinal stitching, not represented in the drawings, which joins the branches (8a, 8b) of the notch (3) to the belt (4). To facilitate this operation, the branches (8a, 8b) are slightly inclined towards the interior, in order to clip and secure in its correct position to the edge of the belt (4) during the fastening process.

Figure 3 shows the working position of the guide bearings (6), on the protuberance (1) of the profile, wherein grooves (9) have been made between the protuberance (1) and the radial extension (2), to avoid the contact of the edges of the bearings (6) and, therefore, their fissure.

**Claims**

1. Peripheral profile for the guiding of curved conveyor belts (4), which comprises: a protuberance (1) whereon the guide rollers (6) contact and a radial extension (2) finished in a longitudinal U-shaped notch (3) for the insertion and fastening to the peripheral edge of the curved conveyor belt (4), **characterized in that** it comprises an elastic area (5), between the protuberance (1) and the notch (3), to absorb the radial oscillations of the belt (4).

2. Peripheral profile for the guiding of curved conveyor belts (4) according to claim 1, **characterized in that** the elastic area (5) comprises a segment of length the same or greater than the equivalent mean thickness of said segment.

3. Peripheral profile for the guiding of curved conveyor belts (4) according to claim 2, **characterized in that** the length of the segment of the elastic area (5) is between 5 and 30 mm.

4. Peripheral profile for the guiding of curved conveyor belts (4) according to claim 1, **characterized in that** the protuberance (1) comprises an axial and continuous orifice (7) symmetrical with respect to the longitudinal shaft (10) of the profile, to improve its bending behaviour.

5. Peripheral profile for the guiding of curved conveyor belts (4) according to claim 4, **characterized in that** the axial orifice (7) is of circular configuration.

6. Peripheral profile for the guiding of curved conveyor belts (4) according to claim 1, **characterized in that** the branches (8a, 8b) of the U-shaped notch (3) are slightly inclined towards the interior to clip to the peripheral edge of the curved conveyor belt (4).

7. Peripheral profile for the guiding of curved conveyor belts (4) according to claim 1, **characterized in that** the joint between the protuberance (1) and the radial fastening extension (2), comprises separate longitudinal grooves (9), to avoid the contact of the edges of the bearings (6) and, therefore, their fissure.

FIG. 1

FIG. 2

FIG. 3

FIG. 4

Europäisches
Patentamt

European
Patent Office

Office européen
des brevets

**EUROPEAN SEARCH REPORT**

Application Number

EP 09 16 5764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 44 12 931 A1 (TRANSNORM SYSTEM GMBH [DE]) 19 October 1995 (1995-10-19) <br> * page 2, line 22 - line 39 * <br> * figures 1,2 * <br> ----- | 1,7 | INV. <br> B65G15/02 |
| | | | TECHNICAL FIELDS SEARCHED (IPC) |
| | | | B65G |

The present search report has been drawn up for all claims

| Place of search | Date of completion of the search | Examiner |
|---|---|---|
| The Hague | 26 January 2010 | Koruk, Volkan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 16 5764

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2010

| Patent document cited in search report | Publication date | Patent family member(s) | Publication date |
|---|---|---|---|
| DE 4412931 A1 | 19-10-1995 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0349830 A